# EUROPEAN PATENT SPECIFICATION

(11) **EP 4 294 648 B1**
(45) Date of publication and mention of the grant of the patent: **09.07.2025**
(21) Application number: 22708686.5
(22) Date of filing: 18.02.2022
(51) Int. Cl.: B60B 17/00, B60B 37/04

(54) **QUICK CHANGE TWO-PIECE RAILROAD WHEEL ASSEMBLY**
ZWEITEILIGE SCHNELLWECHSEL-EISENRADANORDNUNG
ENSEMBLE ROUE DE CHEMIN DE FER EN DEUX PARTIES À CHANGEMENT RAPIDE

(30) Priority: 22.02.2021 US 202163152041 P
(43) Date of publication of application: 27.12.2023
(73) Proprietor: Penn Machine Company LLC, Blairsville, PA 15717 (US)
(72) Inventor: HOLT, Gregory E., Blairsville, Pennsylvania 15717 (US)
(74) Representative: Palmer, Benjamin Jeffrey
(86) International application number: PCT/US2022/017008
(87) International publication number: WO 2022/178268

(56) References cited:
- CN-A- 107 719 012
- CN-A- 107 984 962
- DE-A1- 10 024 765
- DE-A1- 4 415 422
- DE-A1- 4 421 470
- KR-B1- 100 539 144
- KR-B1- 101 440 143
- KR-B1- 101 815 670

## Description

### FIELD OF THE INVENTION

The present invention relates to the railway industry and, more particularly, to a two-piece rail wheel assembly or railroad wheel assembly respectively, for use on rail cars.

### BACKGROUND OF THE INVENTION

Conventional rail wheels comprise a single component that is secured to an axle of a rail car utilizing an interference press fit at the wheel/axle interface. The process of securing the wheel to the axle requires a specialized press capable of forces over 100 tons (e.g., a specialized 400-ton press) to remove and attach the wheel. The operation requires highly-specialized knowledge by the press operators to assure proper and safe fit of the wheel to the axle. A typical interference may be 0.004-0.006 inches. This press fit design has a high risk of damage to both the wheel during installation and removal. Therefore, any method to replace a wheel while eliminating removal of press fit components would be of great benefit to the vehicle operator.

In order to replace and/or repair a conventional rail wheel, the entire truck must be removed from the rail car and the axle/wheel assembly must be removed from the truck. Then it is possible to remove the wheel from the axle using press equipment. Indeed, as the current state of the art requires a large, factory-based press machine, it is not possible to change wheels in the field or on the rail. Instead, the current state of the art requires changing the wheels at the factory where the specialized press machine is available. As a result, the process to replace or repair a wheel of a rail car requires significant time out of service. Additionally, because conventional rail wheels comprise a single component, any damage to the wheel requires removing and potentially replacing the entire wheel in order to place the train back in service.

A wheel design that does not require removing and disassembling the truck (and the frame that holds the axles) when changing a wheel and that allows less than the entirety of the rail wheel to be removed and replaced when a wheel is damaged would be a significant improvement. KR20140086001A discloses a railway wheel, wherein a tire unit is fastened to a web plate integrated with a hub with bolts such that the tire unit is coupled to an outer side of the web plate. The web plate and the tire unit are coupled to each other by fastening the bolts horizontally. CN107719012A discloses an air railway vehicle running gear comprising a hub, a running wheel, an axle, and a vehicle body connecting plate. Axle holes in the form of horizontal blind holes are respectively symmetrically formed in the two sides of the vehicle body connecting plate. The hub and the running wheel are installed at one end of the axle, and the other end of the axle is installed in the axle hole in an interference fit manner and is located through a step surface on the axle. A further rail wheel assembly is disclosed in KR 101 440 143 B1.

### SUMMARY OF THE INVENTION

According to a first aspect of the invention, there is provided a rail wheel assembly as defined in claim 1. According to a second aspect of the invention, there is provided a method for changing a tire of a railroad wheel assembly affixed to a railway vehicle, as defined in claim 9. Aspects of this invention relate to a rail wheel assembly that allows a tire to be replaced without requiring disassembly of the rail vehicle or removal of components directly attached to the axle. In various embodiments, the rail wheel assembly comprises a center wheel hub and a tire configured to engage a rail. The center wheel hub is attached to an axle of a railway vehicle with an interference press fit and includes an outward facing stepped interface located at an outer edge of the center hub. The tire includes an inward facing stepped interface located at an inner edge of the tire. The outward facing stepped interface of the center hub is configured to receive the inward facing stepped interface of the tire. Each of the outward facing stepped interface on the center wheel hub and the inward facing stepped interface of the tire include a plurality of holes configured to receive bolts configured to secure the tire to the rail wheel assembly via the center wheel hub. In various embodiments, the outward facing stepped interface of the center hub interfaces directly with the inward facing stepped interface of the tire (i.e., without any components between the outward facing stepped interface and the inward facing stepped interface).

The two-piece rail wheel assembly described herein may serve a replacement for a one-piece solid steel wheel conventionally used on rail cars and other rail vehicles. Unlike conventional rail car wheels, however, the tire of the rail wheel assembly described herein may be removed and replaced without requiring removal of any of the components affixed directly to the axle. For example, in an in-board bearing configuration, a tire may be replaced on the rail wheel assembly described herein by simply lifting the rail car up, unbolting the tire from the center hub, sliding the tire off the axle, sliding a new tire on, bolting the new tire to the center hub, and lowering the rail car down onto the track. Unlike the process for removing conventional rail wheels, this process does not require using a press machine, detaching the truck assembly from the rail car, or detaching the wheelset (which includes at least the axle, gearbox, bearings, and wheels) from the truck. In order to replace a tire in an out-board bearing configuration using the rail wheel assembly described herein, the truck assembly will need to be detached from the rail car, and the wheelset removed from the truck assembly. However, unlike the process for removing conventional rail wheels in out-board bearing configurations, the rail wheel assembly described herein eliminates the need to use a press machine or remove any other components of the wheelset from axle, including the bearings, brake discs, gearbox, grounding system, and/or any other components of the wheelset. As such, the likelihood of these components being damaged or these components needing to be requalified or replaced is reduced.

These and other objects, features, and characteristics of the invention disclosed herein will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention.

### BRIEF DESCRIPTION OF THE DRAWINGS

The present invention is illustrated by way of example and not limited in the accompanying figures in which like reference numerals indicate similar elements and in which:
**FIG. 1** depicts a perspective view of a two-piece railroad wheel assembly attached to an axle of a rail car and comprising a center hub and a tire bolted together via a stepped interface, which does not fall under the scope of the claimed invention;
**FIG. 2** depicts a perspective sectional view of the example two-piece railroad wheel assembly depicted in **FIG.** 1;
**FIG. 3** depicts a front perspective view of an example center wheel hub of a two-piece railroad wheel assembly, according to one or more aspects described herein;
**FIG. 4** depicts a rear perspective view of an example tire of a two-piece railroad wheel assembly, according to one or more aspects described herein;
**FIG. 5** depicts an exploded perspective view of a two-piece railroad wheel assembly comprising a center wheel hub and a tire bolted together via a stepped interface, which does not fall under the scope of the claimed invention;
**FIG. 6** depicts another exploded perspective view of the example two-piece railroad wheel assembly depicted in **FIG.** 5;
**FIG. 7** depicts an exploded perspective view of a two-piece railroad wheel assembly attached to an axle of a rail car and comprising a center wheel hub and a tire bolted together via a stepped interface;
**FIG. 8** depicts a rear perspective view of an example two-piece railroad wheel assembly comprising bolt retaining plates, according to the invention;
**FIG. 9** depicts a rear perspective sectional view of the example two-piece railroad wheel assembly comprising bolt retaining plates depicted in **FIG. 8****,** according to the invention;
**FIG. 10** depicts a perspective view of an axle of a rail car with a two-piece railroad wheel assembly attached on each side of a rail car, which does not fall under the scope of the claimed invention;
**FIG. 11** depicts a flow diagram of an example process for changing a tire of a two-piece railroad wheel assembly described herein when utilized in an in-board bearing configuration, according to one or more aspects described herein;
**FIG. 12** depicts a flow diagram of an example process for changing a tire of a two-piece railroad wheel assembly described herein when utilized in an out-board bearing configuration, according to one or more aspects described herein.

These drawings are provided for purposes of illustration only and merely depict typical or example embodiments. These drawings are provided to facilitate the reader's understanding and shall not be considered limiting of the breadth, scope, or applicability of the disclosure. For clarity and ease of illustration, these drawings are not necessarily drawn to scale.

### DETAILED DESCRIPTION OF THE INVENTION

In the following description of various examples of the invention, reference is made to the accompanying drawings, which form a part hereof, and in which are shown by way of illustration various example structures, systems, and steps in which aspects of the invention may be practiced. It is to be understood that other specific arrangements of parts, structures, example devices, systems, and steps may be utilized, and structural and functional modifications may be made without departing from the scope of the present invention. Also, while the terms "top," "bottom," "front," "back," "side," and the like may be used in this specification to describe various example features and elements of the invention, these terms are used herein as a matter of convenience, e.g., based on the example orientations shown in the figures. Nothing in this specification should be construed as requiring a specific three-dimensional orientation of structures in order to fall within the scope of this invention.

The invention described herein relates to a two-piece railroad wheel assembly that allows a tire to be replaced without requiring disassembly of the rail vehicle or removal of components directly attached to the axle. While this wheel assembly is designed specifically for rail wheels on rail cars, this wheel assembly design and the corresponding methods described herein may be utilized with any transit system or railway vehicle that utilizes press-fit wheel/axle assemblies.

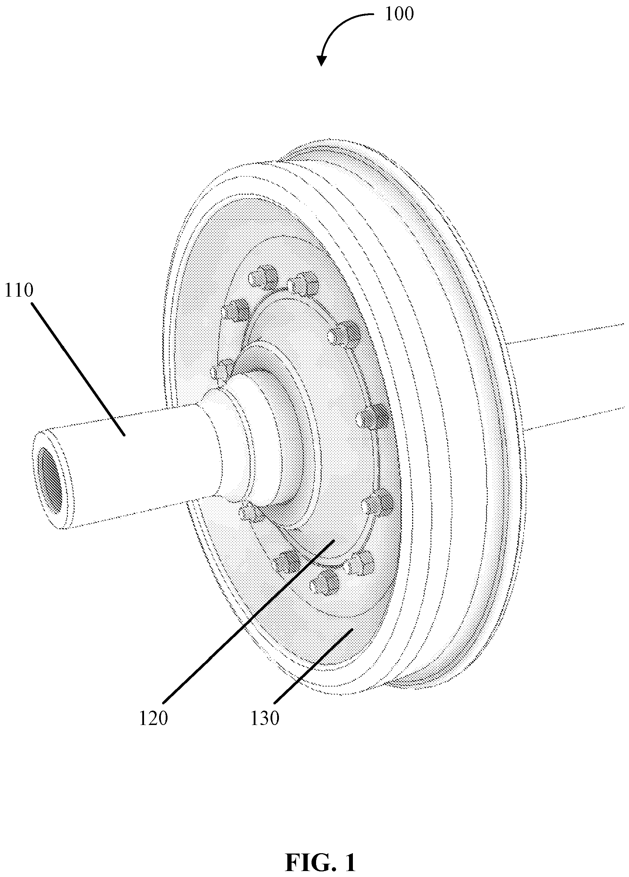

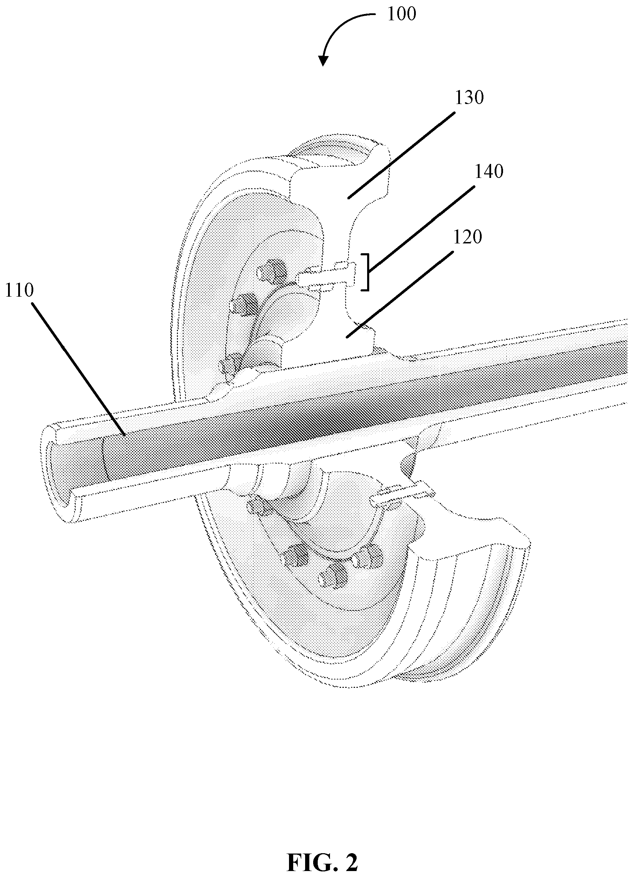

**FIGs. 1** and **2** depict a two-piece railroad wheel assembly 100 attached to an axle 110 of a rail car. Specifically, **FIG. 1** depicts a perspective view of two-piece railroad wheel assembly 100 attached to an axle 110 of a rail car, and **FIG. 2** depicts a perspective sectional view of two-piece railroad wheel assembly 100. In various embodiments, two-piece railroad wheel assembly 100 may comprise a center hub 120, a tire 130, and/or one or more other components. In various embodiments, center hub 120 and tire 130 may be connected to form two-piece railroad wheel assembly 100, which when attached to an axle of a rail car, may comprise a single wheel of the rail car. In various embodiments, center hub 120 and tire 130 may be bolted together via a stepped (or recessed) interface 140. In various embodiments, the stepped or recessed interface 140 between center hub 120 and tire 130 may not allow shear stress in the lateral or load carrying direction on the bolts used to secure tire 130 to center hub 120.

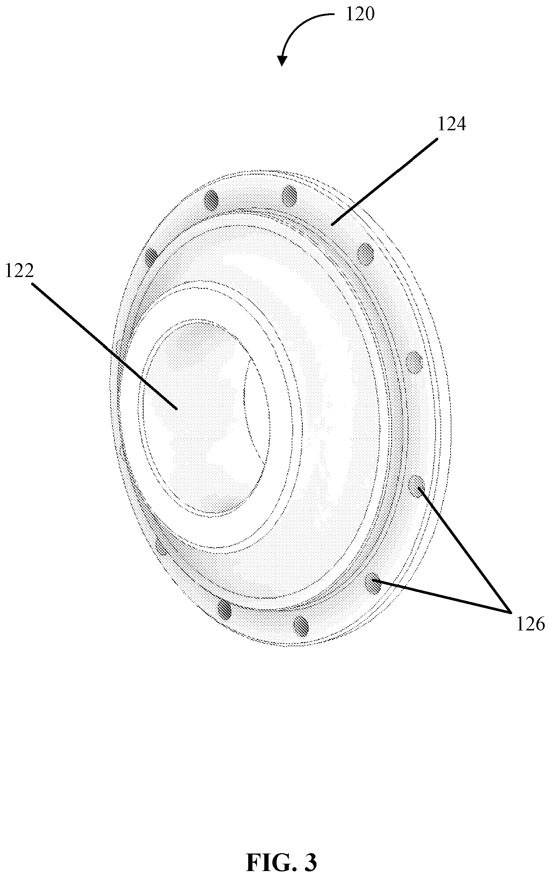

**FIG. 3** depicts a front perspective view of center hub 120, according to one or more aspects described herein. In various embodiments, center hub 120 may comprise an interior interface 122 and a front axial interface 124. In various embodiments, front axial interface 124 of center hub 120 may include a plurality of holes 126. As depicted in **FIG. 3**, front axial interface 124 may comprise a recessed or stepped interface facing outward from center hub 120 (i.e., away from the center of the rail car) and located at an outer edge of center hub 120. In various embodiments, center hub 120 may be configured to be permanently or semi-permanently attached to an axle of a rail car with an interference press fit (as is consistent with common practice for standard wheel designs). For example, center hub 120 may be slid onto an axle of a rail car and press fit to the axle at interior interface 122. In various embodiments, center hub 120 may be configured to remain with an axle of a rail car for the life of the axle or until components inboard center hub 120 require removal from the axle for overhaul or replacement. In some embodiments, center hub 120 may be reinstalled on the axle and reused if in acceptable condition after being removed.

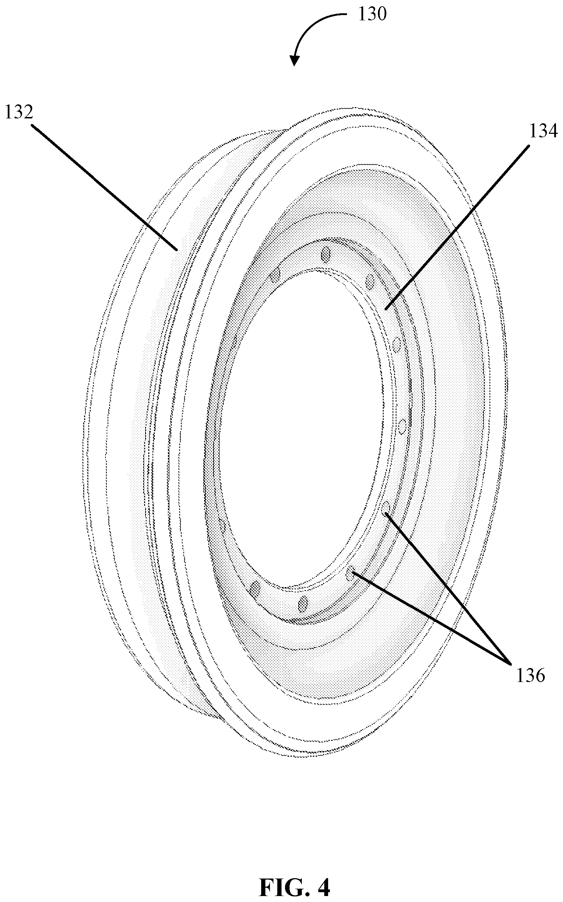

**FIG. 4** depicts a rear perspective view of tire 130, according to one or more aspects described herein. In various embodiments, tire 130 may comprise a rail interface 132 and a rear axial interface 134. Rail interface 132 of tire 130 may be configured to engage a rail when tire is attached to a rail car via center hub 120. In various embodiments, rear axial interface 134 of tire 130 may include a plurality of holes 136. As depicted in **FIG. 4****,** rear axial interface 134 may comprise a recessed or stepped interface facing inward from tire 130 (i.e., toward the center of the rail car) and located at an inner edge of tire 130. In various embodiments, an internal diameter of tire 130 is greater than an outer dimension of a bearing configured to attach a wheelset comprising two-piece railroad wheel assembly 100 to a truck assembly. Thus, an inner diameter of tire 130 is large enough for tire 130 to be slid off the axle without having to remove the bearing when used on a rail car having an out-board bearing configuration. In various embodiments, tire 130 may comprise a steel tire configured to interface with a rail in a similar manner to a conventional rail wheel.

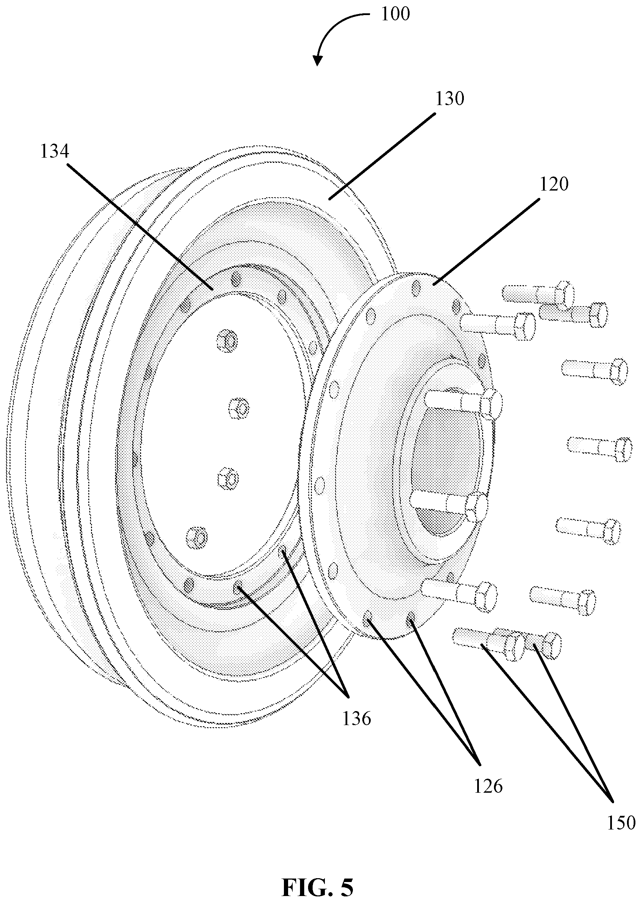

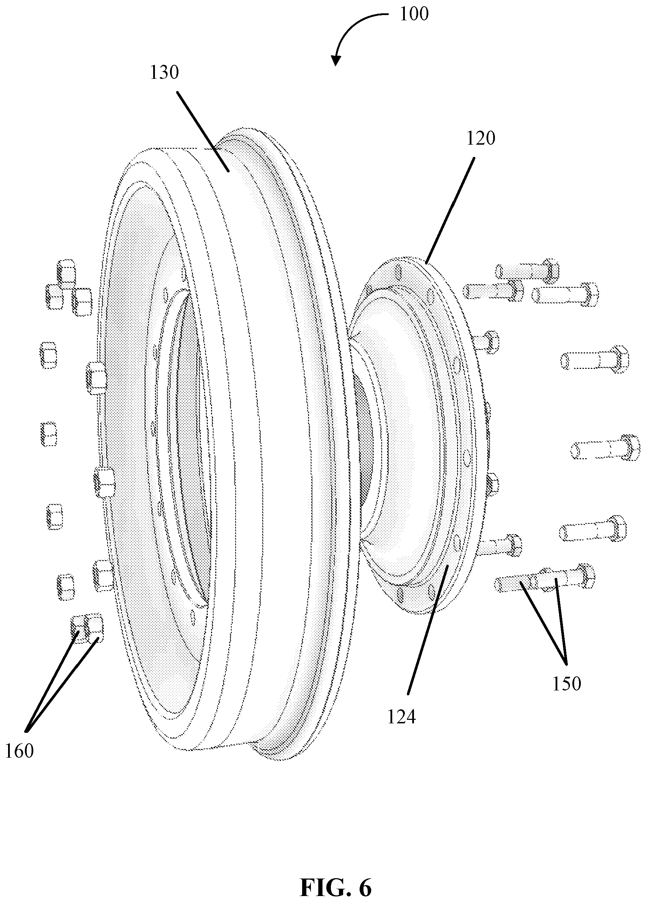

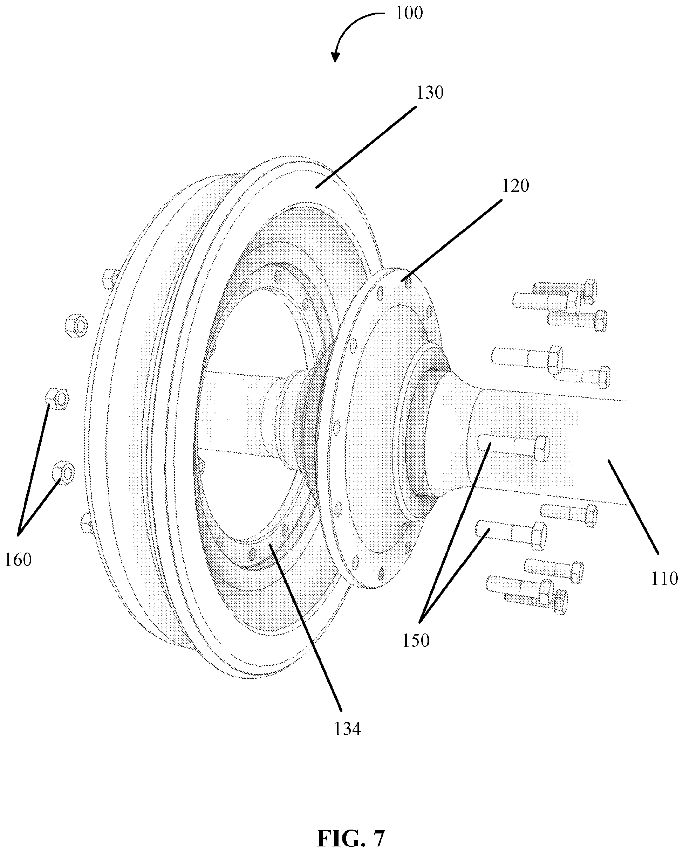

**FIGs. 5-7** depict exploded perspective views of two-piece railroad wheel assembly 100, which does not fall under the scope of the claimed invention. Specifically, **FIGs. 5** and **6** depict exploded perspective views of two-piece railroad wheel assembly 100 comprising center hub 120 and tire 130 bolted together via a stepped or recessed interface, and **FIG. 7** depicts an exploded perspective view of two-piece railroad wheel assembly 100 comprising center hub 120 attached to axle 110 and tire 130 bolted to center hub 120 via a stepped or recessed interface, according to one or more aspects described herein. In various embodiments, features of center hub 120 must be aligned to corresponding features of tire 130 in order to attach tire 130 to axle 110 via center hub 120. For example, front axial interface 124 of center hub 120 may be configured to receive rear axial interface 134 of tire 130. When pressed together, front axial interface 124 of center hub 120 and rear axial interface 134 of tire 130 define stepped interface 140 as identified in **FIG. 1****.** In various embodiments, stepped interface 140 may provide circumferential alignment between center hub 120 and tire 130 and is capable of carrying vehicle forces in operation.

In various embodiments, front axial interface 124 of center hub 120 directly interfaces with rear axial interface 134 of tire 130. In other words, front axial interface 124 of center hub 120 is flush against rear axial interface 134 of tire 130. Any components, material, or space between front axial interface 124 of center hub 120 and rear axial interface 134 of tire 130 would cause tire 130 to move relative to center hub 120, which would reduce the load carrying capacity of two-piece railroad wheel assembly 100 and the speed with which two-piece railroad wheel assembly 100 would be able to travel. For example, any components between center hub 120 and tire 130 would reduce the load carrying capacity and maximum speed of two-piece railroad wheel assembly 100 such that it would be suitable for use with freight cars or heavier passenger cars. As such, in various embodiments, center hub 120 interfaces directly with tire 130 (i.e., without any components between front axial interface 124 and rear axial interface 134).

In some embodiments, stepped interface 140 may include a taper on corresponding horizontal portions of front axial interface 124 and rear axial interface 134 to ease mounting of tire 130 onto center hub 120. In some embodiments, corrosion prevention features may be utilized in stepped interface 140 (i.e., between front axial interface 124 and rear axial interface 134). For example, rust prevention features may be utilized in stepped interface 140 (i.e., between front axial interface 124 and rear axial interface 134).

In various embodiments, the plurality of holes 126 on front axial interface 124 may align with the plurality of holes 136 on rear axial interface 134 to form a plurality of holes via which tire 130 may be bolted to center hub 120. For example, bolts 150 may be inserted into the plurality of holes 126, 136 and secured via nuts 160 on the opposite side to affix or "lock" tire 130 to axle 110 via center hub 120. In various embodiments, bolts 150 may comprise screws, pins, and/or any other mechanical fastener that is known and used in the art, and nuts 160 may comprise any corresponding component known and used in the art that is configured to receive bolts 150. In various embodiments, the nuts 160 may comprise self-contained locking nuts. In some embodiments, the nuts 160 may include multiple locking features for redundancy. For example, one or more individual nuts 160 may include slits in the side of the nuts 160 (one on each side) that force the nuts to bind on themselves when removed. The top part above the slit will not want to move where the part below the slit does. In some embodiments, the nuts 160 may include slits on each side of the nut that run the entire way through the nut. In some embodiments, the nuts 160 may be used in connection with a Belleville-style washer. A Belleville-style washer is a type of conical spring washer that spreads out as you tighten it and acts as a spring force to further lock bolts 150 in place using nuts 160. In some embodiments, the combination of bolts 150 and nuts 160 may include a custom fastener specifically designed for use in two-piece railroad wheel assembly 100. For example, in some embodiments, a no mare fastener may be used to further secure tire 130 to center hub 120 without marking either the tire 130 or center hub 120.

In various embodiments, a plurality of bolts 150 may be utilized to secure tire 130 to center hub 120 via the plurality of holes 126, 136. The number of bolts 150 may range from two bolts to ten or even more bolts. In various embodiments, the plurality of holes 126, 136 may be geometrically and even spaced around axle 110. For example, twelve bolts 150 evenly spaced around the wheel may be utilized to secure tire 130 to center hub 120 via the plurality of holes 126, 136.

In various embodiments, bolts 150 may be configured to provide only clamping force between tire 130 and center hub 120 and not carry shear forces perpendicular to the bolt centerline. In some embodiments, one or more alignment/shear pins may be utilized in conjunction with bolts 150 and nuts 160 to secure tire 130 to center hub 120. For example, in an example embodiment, one or more of the plurality of bolts 150 may be replaced with alignment/shear pins. The alignment/shear pins may be utilized to carry loads between center hub 120 and tire 130 to avoid shear forces on the bolts.

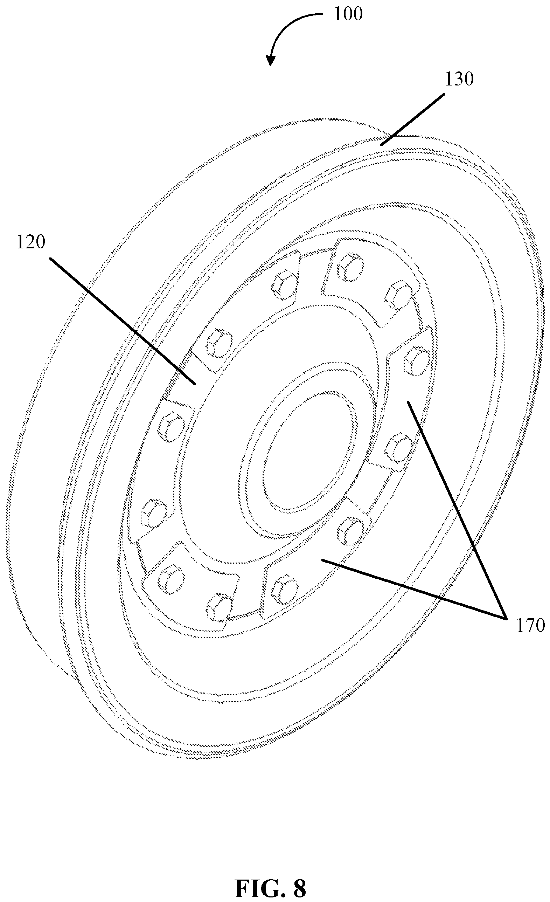

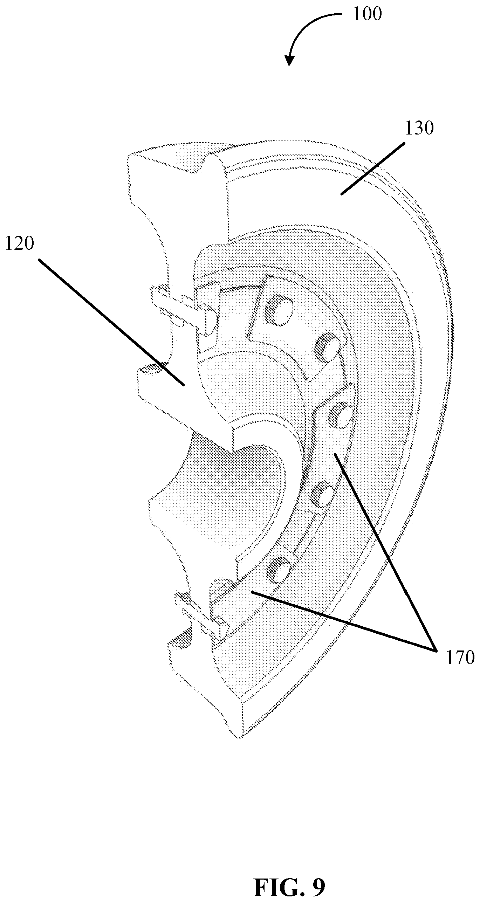

According to the invention, the two-piece railroad wheel assembly 100 includes one or more bolt retaining plates (also interchangeably referred to herein as "bolt retainers") positioned on the rear (or interior) side of center hub 120 and configured to hold two or more of bolts 150 in place. For example, **FIGs. 8** and **9** depict two-piece railroad wheel assembly 100 comprising bolt retainers 170, according to one or more aspects described herein. Specifically, **FIG. 8** depicts a rear perspective view of two-piece railroad wheel assembly 100 comprising bolt retainers 170, and **FIG. 9** depicts a rear perspective sectional view of two-piece railroad wheel assembly 100 comprising bolt retainers 170, according to one or more aspects described herein. As depicted in **FIGs. 8** and **9****,** bolt retainers 170 may comprise a plate that includes two holes configured to receive two or more bolts 150 prior to bolts 150 being inserted into holes 126 of center hub 120. In some embodiments, each bolt 150 may be inserted into a bolt retainer 170 with at least one other bolt 150, as depicted in **FIGs. 8** and **9****.** Bolt retainers 170 may be configured to temporarily hold bolts 150 in position for assembly of the two-piece railroad wheel assembly 100. For example, bolt retainers 170 may be configured to hold bolts 150 in position within the plurality of holes 126 of center hub 120 such that bolts 150 are aligned for receipt by the plurality of holes 136 of tire 130. Bolt retainers 170 may be configured to prevent bolts 150 from rotating when attaching nuts 160 on the opposite side of two-piece railroad wheel assembly 100. As such, bolt retainers 170 may eliminate the need for a wrench to screw a nut 160 onto a bolt 150, which can reduce the time and difficulty associated with changing a tire 130 of two-piece railroad wheel assembly 100 as the rear (or interior) side of center hub 120 may be difficult to reach when center hub 120 is affixed to an axle 110. Bolt retainers 170 may also be configured to lock bolts in places once tightened. In other words, bolt retainers 170 may be configured to prevent bolts 150 from coming loose during travel. In some embodiments, bolt retainers 170 may further eliminate the need to include features in wheel that would provide crack propagation point, as bolt retainers 170 prevent bolts 150 from contacting a side of center hub 120.

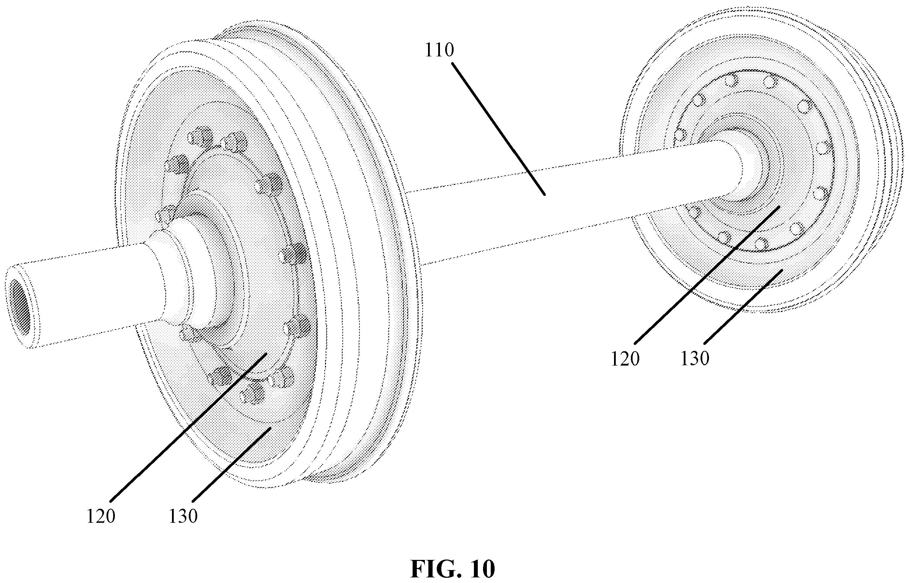

**FIG. 10** depicts a perspective view of an axle 110 of a rail car with a two-piece railroad wheel assembly 100 comprising a center hub 120 and a tire 130 attached to axle 110 on each side of the rail car, which does not fall under the scope of the claimed invention. As described herein, axle 110 may comprise a rail car axle. In various embodiments, two-piece railroad wheel assembly 100 is a replacement for one-piece solid steel wheels conventionally used on rail cars and other rail vehicles. However, two-piece railroad wheel assembly 100 may be compatible with all existing axle designs. Two-piece railroad wheel assembly 100 may also be utilized with any transit system that utilizes press-fit wheel/axle assemblies.

Utilizing a two-piece railroad wheel assembly 100 comprising a center hub 120 and a tire 130 may provide many benefits over prior art designs. For example, two-piece railroad wheel assembly 100 may allow replacement of tire 130 without the need for major disassembly of the rail vehicle. For example, in order to replace and/or repair a conventional rail wheel, the entire rail vehicle must first be moved to a maintenance facility and then lifted with a crane in order to detach the truck assembly. The truck assembly must then be moved to a maintenance stand where the wheelset (which includes the axle, gearbox, bearings, and wheels) is detached from the truck. As described herein, removing a conventional rail wheel requires the use of a large, factory-based press machine that cannot be used to remove the wheel if the wheel set is attached to the truck. The wheelset must then be moved to a wheel press facility wherein the wheels, journal bearings, brake discs, and gearbox are removed from the axle. As described herein, the components of conventional rail wheels are mounted to the axle with interference press fits. As such, disassembly places all the components of the wheelset at risk of damage.

Once disassembled, various components must be requalified or replaced per Association of American Railroads (AAR) requirements depending on whether the rail car has a in-board or out-board bearing configuration. Trucks are attached to axles at journal bearings. In an in-board bearing configuration, the journal bearings are located inside the wheels. In an out-board bearing configuration, the journal bearings are located outside the wheels. Because removing conventional rail wheels requires use of a press machine, and press machines require the wheelset be removed from the truck, the wheelset must be removed from the truck to replace a conventional rail wheel regardless of whether it is in an in-board or out-board bearing configuration. In an out-board bearing configuration (in which the bearing is located outside the wheels), the bearings must also be removed because conventional rail wheels cannot be slid over the bearing. According to AAR Manual of Standards and Recommended Practices, Section G-II, Sub-Section 1.1.9, when a journal bearing is removed from an axle, the axle must be wet magnetic particle tested prior to remounting a bearing. AAR Manual of Standards and Recommended Practices, Section G-II, Sub-Section 1.8.1.2.4 further requires that any journal bearing that is removed from an axle for any reason be sent for reconditioning or replaced with a new bearing. As such, when removing a conventional rail wheel from an out-board bearing configuration (which is more common for freight cars and heavier passenger cars), the axles must also be requalified dimensionally and by magnetic particle inspection, and the bearings must be requalified or replaced. In some instances, the brake disc may also need to be requalified or replaced, and the gearbox may need to be rebuilt. Only once these components have been requalified, replaced, and/or rebuilt can the wheelset be reassembled with new wheels.

In order to reassemble the wheelset with new wheels, the wheels, journal bearings, brake discs, and gearbox must all be press fit on the axle. Similar to disassembly, reassembly of these interference fit components places each component at risk of damage. The reassembled wheelset must then be moved to a truck maintenance stand where the truck is rebuilt before being replaced under the vehicle. Before being replaced under the vehicle, however, the same extensive process performed for one wheelset must also be performed on its mate. Per AAR Manual of Standards and Recommended Practices, Section G-II, Sub-Section 1.4.7.3, any time a single wheel is dismounted from an axle, it's mate must also be dismounted regardless of condition.

The process required to replace and/or repair a conventional rail wheel is both labor, cost, and time-intensive. Indeed, in addition to requiring a large, factory-based press machine and posing increased risk of damage to the wheelset and its components, the process to replace or repair a wheel of a rail car also requires significant time out of service. Unlike the labor, cost, and time-intensive process required to replace a conventional rail wheel, replacing tire 130 of two-piece railroad wheel assembly 100 does not require even removing or disassembling the truck assembly when two-piece railroad wheel assembly 100 is utilized in an in-board bearing configuration.

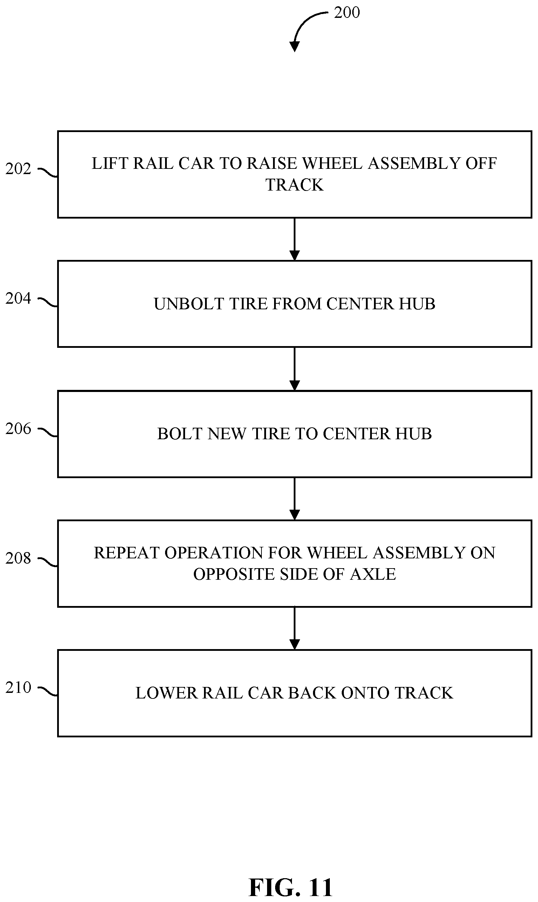

**FIG. 11** illustrates an example of a process 200 for changing tire 130 of two-piece railroad wheel assembly 100 when utilized in an in-board bearing configuration, according to one or more aspects described herein. In an operation 202, process 200 may include lifting the rail car on which two-piece railroad wheel assembly 100 is affixed to raise tire 130 off the track. In various embodiments, the rail car may be moved to a maintenance facility where the rail car is lifted. In an operation 204, process 200 may include unbolting tire 130 from center hub 120 and removing tire 130 from axle 110. In an in-board bearing configuration, tire 130 can be removed from the axle 110 once unbolted from center hub 120 without having to remove the wheelset from the truck because the frame of the truck is inside two-piece railroad wheel assembly 100. In an operation 206, process 200 may include sliding a new tire 130 onto axle 110 and bolting the new tire 130 to center hub 120. In various embodiments, the hardware used to affix the old tire 130 to the center hub 120 (e.g., the bolts 150, nuts 160, and/or bolt retainers 170) may disposed of and new hardware may be used to affix the new tire 130 to center hub 120. In an operation 208, process 200 may include repeating operation 204 and operation 206 for the two-piece railroad wheel assembly 100 on the opposite side of axle 110. In various embodiments, each time a tire 130 is replaced, the tire 130 of the two-piece railroad wheel assembly 100 on the opposite side of the wheelset (or axle 110) must also be replaced to ensure the wheel diameter is similar on opposite sides of the rail car. In an operation 210, process 200 may include lowering the rail car back onto the track. Thus, unlike the process required to replace a conventional rail wheel in an in-board bearing configuration, replacing a tire 130 of a two-piece railroad wheel assembly 100 in an in-board bearing configuration does not require using a press machine, detaching the truck assembly from the rail car, or detaching the wheelset from the truck.

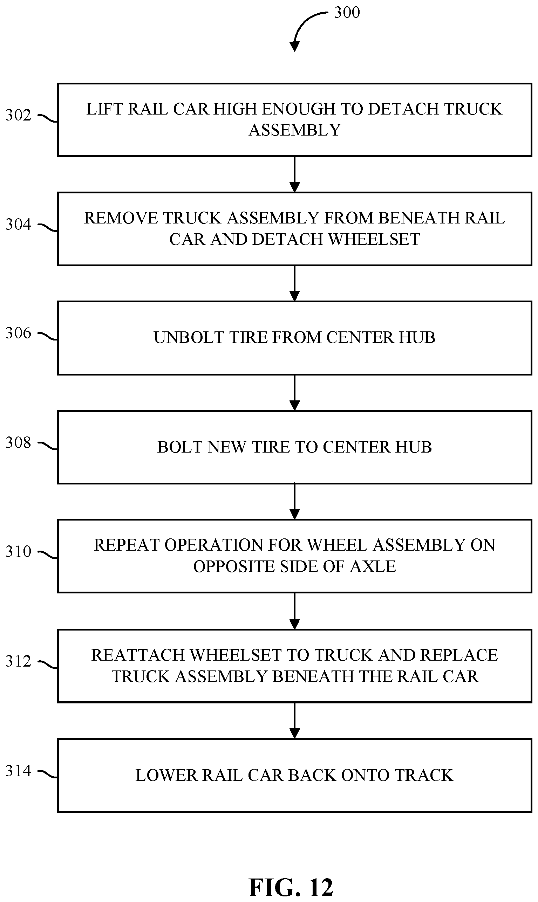

When used in an out-board bearing configuration, the process to replace tire 130 of two-piece railroad wheel assembly 100 also represents an improvement over the process to replace a conventional rail wheel in the same configuration. **FIG. 12** illustrates an example of a process 300 for changing tire 130 of two-piece railroad wheel assembly 100 when utilized in an out-board bearing configuration, according to one or more aspects described herein. In an operation 302, process 300 may include lifting the rail car high enough to detach the truck assembly from the rail car. In various embodiments, lifting the rail car high enough to detach the truck assembly may require moving the rail car to a maintenance facility and/or lifting the rail car using a crane or similar machine. In an operation 304, process 300 may include removing the truck assembly from beneath the rail car and detaching the wheelset from the truck assembly. In some embodiments, detaching the wheelset from the truck assembly may require moving the truck assembly to a maintenance stand. In an operation 306, process 300 may include unbolting tire 130 from center hub 120 and removing tire 130 from axle 110. Unlike in an in-board bearing configuration, tire 130 cannot be removed from the axle 110 in an out-board bearing configuration without first removing the wheelset from the truck because the frame of the truck is outside the two-piece railroad wheel assembly 100 and would block removal of tire 130. In an operation 308, process 300 may include sliding a new tire 130 over the bearing and bolting the new tire 130 to center hub 120. In various embodiments, the hardware used to affix the old tire 130 to the center hub 120 (e.g., the bolts 150, nuts 160, and/or bolt retainers 170) may disposed of and new hardware may be used to affix the new tire 130 to center hub 120. In an operation 310, process 300 may include repeating operation 306 and operation 308 for the two-piece railroad wheel assembly 100 on the opposite side of axle 110. In various embodiments, each time a tire 130 is replaced, the tire 130 of the two-piece railroad wheel assembly 100 on the opposite side of the wheelset (or axle 110) must also be replaced to ensure the wheel diameter is similar on opposite sides of the rail car. In an operation 312, process 300 may include reattaching the wheelset to the truck and replacing the truck assembly beneath the rail car. In an operation 314, process 300 may include lowering the rail car back onto the track. Thus, unlike the process required to replace a conventional rail wheel in an out-board bearing configuration, replacing a tire 130 of a two-piece railroad wheel assembly 100 in an out-board bearing configuration does not require using a press machine or removing any other components of wheelset from axle 110 (including the bearings, brake discs, gearbox, grounding system, and/or any other components of the wheelset attached to axle 110). As such, neither the axle nor any other components need to be tested or requalified, and no bearings need to be reconditioned or replaced when replacing tire 130 of two-piece railroad wheel assembly 100.

Accordingly, in both in-board and out-board bearing configurations, two-piece railroad wheel assembly 100 represents an improvement over conventional rail wheels. Two-piece railroad wheel assembly 100 does not require special tools to remove or replace the wear surface on the wheel (i.e., tire 130). Indeed, the large hydraulic press machine required to change a conventional rail wheel is not needed to change tire 130. Two-piece railroad wheel assembly 100 also eliminates the need to remove certain components when removing and replacing tire 130, including any components directly attached to axle 110. As such, the risk of damage to axle 110 when replacing a wheel is reduced compared to common practices for replacing conventional interference press fit wheels. Indeed, when removing a conventional rail wheel, the axle itself is frequently gauged in the process, which often requires replacing the axle. By reducing the risk of damage to axle 110 and other components affixed to axle 110, the two-piece railroad wheel assembly described herein reduces the number of scraped axles and other components, resulting in less steel consumed each time the wear surface of the wheel is renewed, which is good for the environment as it uses less energy to manufacture and machine. Also, as described above, if any components of a truck are removed from an axle (e.g., pressed on wheel, bearing, brake, or gearbox), the axle and bearings must be fully requalified per Association of American Railroads (AAR) requirements. For example, as provided above, AAR Manual of Standards and Recommended Practices, Section G-II, Sub-Section 1.8.1.2.4 currently states that if a journal bearing is removed from an axle for any reason, it must be sent for reconditioning or replaced with a new bearing. However, bearings have a performance life upwards of 5 times the life of a wheel. Thus, by allowing a wheel to be changed without having to recondition or replace bearings or other components, two-piece railroad wheel assembly 100 represent a significant operating cost advantage compared to prior art wheel designs by reducing labor cost, as well as by reducing the time the rail car spends out of service when replacing worn or damaged wheels.

It is to be understood that the invention is not limited in its application to the details of construction and the arrangement of the components set forth herein. The invention is capable of other embodiments and of being practiced or being carried out in various ways. The scope of the invention is defined by the appended claims.

## Claims

1. A rail wheel assembly (100) for a railway vehicle comprising:
a center wheel hub (120) attached to an axle (110) of a railway vehicle with an interference press fit, wherein the center wheel hub (120) includes an outward facing stepped interface (124) located at an outer edge of the center hub (120), the outward facing stepped interface (124) comprising a first set of holes (126); and
a tire (130) configured to engage a rail, wherein the tire (130) includes an inward facing stepped interface (134) located at an inner edge of the tire (130), the inward facing stepped interface (134) comprising a second set of holes (136);
wherein the outward facing stepped interface (124) of the center wheel hub (120) is configured to receive the inward facing stepped interface (134) of the tire (130),
wherein when the first set of holes (126) is aligned with the second set of holes (136), the first set of holes (126) and the second set of holes (136) are together configured to receive bolts (150) configured to secure the tire (130) to the center wheel hub (120), **characterised in that**,
the bolts (150) are configured to be inserted into the first set of holes (126) via an interior side of the outward facing stepped interface (124), wherein each bolt (150) is configured to be inserted into one of a set of bolt retaining plates (170) before being inserted into one of the first set of holes (126), wherein each bolt retaining plate (170) includes at least two holes configured to receive adjacent bolts (150), and
wherein the tire (130) is configured to be removed and replaced once secured to the center wheel hub (120) without requiring removal of any components affixed directly to the axle (110).

2. The rail wheel assembly of claim 1, wherein the outward facing stepped interface (124) of the center hub (120) interfaces directly with the inward facing stepped interface (134) of the tire (130) without any components between the outward facing stepped interface (124) and the inward facing stepped interface (134).

3. The rail wheel assembly of claim 1, wherein the tire (130) comprises a steel tire.

4. The rail wheel assembly of claim 1, wherein the bolts (150) inserted into the first set of holes (126) and the second set of holes (136) secure the tire (130) to the center wheel hub (120) using self-contained locking nuts (160).

5. The rail wheel assembly of claim 1, wherein each bolt retaining plate (170) is configured to hold two or more bolts (150) in position within the first set of holes (126) and prevent bolts from coming loose during travel.

6. The rail wheel assembly of claim 1, wherein an internal diameter of the tire (130) is greater than an outer dimension of a bearing configured to attach a wheelset comprising the rail wheel assembly (100) to a truck assembly.

7. The rail wheel assembly of claim 1, wherein the tire (130) is configured to be removed from the rail wheel assembly (100) and replaced without requiring use of a press machine.

8. The rail wheel assembly of claim 1, wherein the railway vehicle has an in-board bearing configuration, and wherein the tire (130) is configured to be removed from the rail wheel assembly (100) and replaced without requiring detachment of a truck assembly from the railway vehicle or detachment of a wheelset that includes the rail wheel assembly from a truck assembly.

9. A method for changing a tire (130) of a railroad wheel assembly (100) according to one of the preceding claims affixed to a railway vehicle, wherein the railroad wheel assembly comprises a center wheel hub (120) affixed to an axle (110) of the railway vehicle and a tire (130) secured to the railway vehicle via the center wheel hub (120), the method comprising:
lifting a railway vehicle on which the railroad wheel assembly is affixed;
unbolting the tire (130) from the center wheel hub (120);
removing the tire (130) from the railway vehicle without using a press machine or having to remove any components affixed directly to the axle (110);
sliding a new tire (130) onto the axle (110), wherein the new tire (130) is secured to the railway vehicle via the center wheel hub (120) using bolts (150) inserted into both a first set of holes (126) of the center wheel hub (120) and a second set of holes (136) of the tire (130) via an interior side of the center wheel hub (120), wherein each bolt (150) is inserted into one of a set of bolt retaining plates (170) before being inserted into one of the first set of holes (126), wherein each bolt retaining plate (170) includes at least two holes configured to receive adjacent bolts (150); and
lowering the railway vehicle back onto the track.

10. The method of claim 9, wherein the railway vehicle has an in-board bearing configuration, and wherein the tire (130) is removed from the railway vehicle without having to detach a truck assembly from the railway vehicle or having to remove a wheelset comprising the railroad wheel assembly (100) from a truck assembly of the railway vehicle.

11. The method of claim 9, wherein the railway vehicle has an out-board bearing configuration, and wherein sliding the new tire onto the axle (110) comprises sliding the new tire over a bearing used to affix a wheelset comprising the railroad wheel assembly (100) to a truck assembly of the railway vehicle.

12. The method of claim 11, wherein an internal diameter of the tire (130) is greater than an outer dimension of the bearing.

13. The method of claim 11, the method further comprising:
removing a truck assembly from beneath the railway vehicle;
detaching a wheelset comprising the railroad wheel assembly (100) from a truck assembly of the railway vehicle;
reattaching the wheelset comprising the railroad wheel assembly having the new tire to the truck assembly; and
replacing the truck assembly beneath the railway vehicle.

14. The method of claim 9, wherein the changing the tire (130) does not require any other components to be requalified or replaced.

## Patentansprüche

1. Eisenbahnradanordnung (100) für ein Eisenbahnfahrzeug, umfassend:
eine mittlere Radnabe (120), die an einer Achse (110) eines Eisenbahnfahrzeugs mit einer Pressanpassung angebracht ist, wobei die mittlere Radnabe (120) eine nach außen weisende gestufte Schnittstelle (124) einschließt, die an einer Außenkante der mittleren Nabe (120) gelegen ist, wobei die nach außen weisende gestufte Schnittstelle (124) einen ersten Satz von Öffnungen (126) umfasst; und
einen Reifen (130), der konfiguriert ist, um in eine Schiene einzugreifen, wobei der Reifen (130) eine nach innen weisende gestufte Schnittstelle (134) einschließt, die an einer Innenkante des Reifens (130) gelegen ist, wobei die nach innen weisende gestufte Schnittstelle (134) einen zweiten Satz von Öffnungen (136) umfasst;
wobei die nach außen weisende gestufte Schnittstelle (124) der mittleren Radnabe (120) konfiguriert ist, um die nach innen weisende gestufte Schnittstelle (134) des Reifens (130) aufzunehmen,
wobei, wenn der erste Satz von Öffnungen (126) mit dem zweiten Satz von Öffnungen (136) ausgerichtet ist, der erste Satz von Öffnungen (126) und der zweite Satz von Öffnungen (136) gemeinsam konfiguriert sind, um Bolzen (150) aufzunehmen, die konfiguriert sind, um den Reifen (130) an der mittleren Radnabe (120) zu befestigen, **dadurch gekennzeichnet, dass** die Bolzen (150) konfiguriert sind, um in den ersten Satz von Öffnungen (126) über eine Innenseite der nach außen weisende gestufte Schnittstelle (124) eingefügt zu werden, wobei jeder Bolzen (150) konfiguriert ist, um in eine von einem Satz von Bolzenhalteplatten (170) eingefügt zu werden, bevor er in eine des ersten Satzes von Öffnungen (126) eingefügt wird, wobei jede Bolzenhalteplatte (170) mindestens zwei Öffnungen einschließt, die konfiguriert sind, um benachbarte Bolzen (150) aufzunehmen, und
wobei der Reifen (130) konfiguriert ist, um abgenommen und ausgetauscht zu werden, sobald er an der mittleren Radnabe (120) befestigt ist, ohne Abnahme jeglicher Bauteile zu erfordern, die unmittelbar an der Achse (110) festgemacht sind.

2. Eisenbahnradanordnung nach Anspruch 1, wobei die nach außen weisende gestufte Schnittstelle (124) der mittleren Nabe (120) unmittelbar an die nach innen weisende gestufte Schnittstelle (134) des Reifens (130) ohne Bauteile zwischen der nach außen weisenden gestuften Schnittstelle (124) und der nach innen weisenden gestuften Schnittstelle (134) angrenzt.

3. Eisenbahnradanordnung nach Anspruch 1, wobei der Reifen (130) einen Stahlreifen umfasst.

4. Eisenbahnradanordnung nach Anspruch 1, wobei die Bolzen (150), die in den ersten Satz von Öffnungen (126) und den zweiten Satz von Öffnungen (136) eingefügt sind, den Reifen (130) unter Verwendung von selbstsichernden Muttern (160) an der mittleren Radnabe (120) befestigen.

5. Eisenbahnradanordnung nach Anspruch 1, wobei jede Bolzenhalteplatte (170) konfiguriert ist, um zwei oder mehr Bolzen (150) innerhalb des ersten Satzes von Öffnungen (126) in Position zu halten und zu verhindern, dass sich Bolzen beim Transport lösen.

6. Eisenbahnradanordnung nach Anspruch 1, wobei ein Innendurchmesser des Reifens (130) größer ist als eine Außenabmessung eines Lagers, das konfiguriert ist, um einen Radsatz, der die Eisenbahnradanordnung (100) umfasst, an einer Fahrgestellanordnung anzubringen.

7. Eisenbahnradanordnung nach Anspruch 1, wobei der Reifen (130) konfiguriert ist, um von der Eisenbahnradanordnung (100) abgenommen zu werden und ausgetauscht zu werden, ohne die Verwendung einer Pressmaschine zu erfordern.

8. Eisenbahnradanordnung nach Anspruch 1, wobei das Eisenbahnfahrzeug eine Innenlager-Konfiguration aufweist, und wobei der Reifen (130) konfiguriert ist, um von der Eisenbahnradanordnung (100) abgenommen zu werden und ausgetauscht zu werden, ohne Loslösung einer Fahrgestellanordnung vom Eisenbahnfahrzeug oder Loslösung eines Radsatzes, der die Eisenbahnradanordnung einschließt, von einer Fahrgestellanordnung zu erfordern.

9. Verfahren zum Wechseln eines Reifens (130) einer Eisenbahnradanordnung (100) nach einem der vorstehenden Ansprüche, der an einem Eisenbahnfahrzeug festgemacht ist, wobei die Eisenbahnradanordnung eine mittlere Radnabe (120) umfasst, die an einer Achse (110) des Eisenbahnfahrzeugs festgemacht ist, und einen Reifen (130), der über die mittlere Radnabe (120) am Eisenbahnfahrzeug befestigt ist, wobei das Verfahren umfasst:
Anheben eines Eisenbahnfahrzeugs, auf dem die Eisenbahnradanordnung festgemacht ist;
Aufriegeln des Reifens (130) von der mittleren Radnabe (120);
Abnehmen des Reifens (130) vom Eisenbahnfahrzeug, ohne eine Pressmaschine zu verwenden oder jegliche Bauteile entfernen zu müssen, die unmittelbar an der Achse (110) festgemacht sind;
Gleiten eines neuen Reifens (130) auf die Achse (110); wobei der neue Reifen (130) über die mittlere Radnabe (120) unter Verwendung von Bolzen (150), die sowohl in einen ersten Satz von Öffnungen (126) der mittleren Radnabe (120) als auch in einen zweiten Satz von Öffnungen (136) des Reifens (130) eingefügt sind, über eine Innenseite der mittleren Radnabe (120) am Eisenbahnfahrzeug befestigt wird, wobei jeder Bolzen (150) in eine von einem Satz von Bolzenhalteplatten (170) eingefügt wird, bevor er in eine des ersten Satzes von Öffnungen (126) eingefügt wird, wobei jede Bolzenhalteplatte (170) mindestens zwei Öffnungen einschließt, die konfiguriert sind, um benachbarte Bolzen (150) aufzunehmen; und
Absenken des Eisenbahnfahrzeugs zurück auf die Schiene.

10. Verfahren nach Anspruch 9, wobei das Eisenbahnfahrzeug eine Innenlager-Konfiguration aufweist, und wobei der Reifen (130) vom Eisenbahnfahrzeug abgenommen wird, ohne eine Fahrgestellanordnung vom Eisenbahnfahrzeug loslösen zu müssen oder einen Radsatz, der die Eisenbahnradanordnung (100) umfasst, von einer Fahrgestellanordnung des Eisenbahnfahrzeugs abnehmen zu müssen.

11. Verfahren nach Anspruch 9, wobei das Eisenbahnfahrzeug eine Außenlager-Konfiguration aufweist, und wobei Gleiten des neuen Reifens auf die Achse (110) Gleiten des neuen Reifens über ein Lager hinweg, das verwendet wird, um einen Radsatz, der die Eisenbahnradanordnung (100) umfasst, an einer Fahrgestellanordnung des Eisenbahnfahrzeugs umfasst.

12. Verfahren nach Anspruch 11, wobei ein Innendurchmesser des Reifens (130) größer ist als eine Außenabmessung des Lagers.

13. Verfahren nach Anspruch 11, wobei das Verfahren weiter umfasst:
Abnehmen der Fahrgestellanordnung von unterhalb des Eisenbahnfahrzeugs;
Loslösung eines Radsatzes, der die Eisenbahnradanordnung (100) umfasst, von einer Fahrgestellanordnung des Eisenbahnfahrzeugs;
erneutes Anbringen des Radsatzes, der die Eisenbahnradanordnung umfasst, die den neuen Reifen aufweist, an die Fahrgestellanordnung; und
Austauschen der Fahrgestellanordnung unterhalb des Eisenbahnfahrzeugs.

14. Verfahren nach Anspruch 9, wobei das Wechseln des Reifens (130) nicht erfordert, dass andere Bauteile erneut qualifiziert oder ausgetauscht werden.

## Revendications

1. Ensemble roue de chemin de fer (100) pour un véhicule de chemin de fer comprenant :
un moyeu de roue central (120) attaché à un essieu (110) d'un véhicule de chemin de fer par un montage à la presse avec serrage, dans lequel le moyeu de roue central (120) inclut une interface étagée orientée vers l'extérieur (124) située au niveau d'un bord externe du moyeu central (120), l'interface étagée orientée vers l'extérieur (124) comprenant un premier ensemble de trous (126) ; et
un bandage (130) conçu pour venir en prise avec un rail, dans lequel le bandage (130) inclut une interface étagée orientée vers l'intérieur (134) située au niveau d'un bord interne du bandage (130), l'interface étagée orientée vers l'intérieur (134) comprenant un second ensemble de trous (136) ;
dans lequel l'interface étagée orientée vers l'extérieur (124) du moyeu de roue central (120) est configurée pour recevoir l'interface étagée orientée vers l'intérieur (134) du bandage (130),
dans lequel lorsque le premier ensemble de trous (126) est aligné avec le second ensemble de trous (136), le premier ensemble de trous (126) et le second ensemble de trous (136) sont configurés ensemble pour recevoir des boulons (150) configurés pour fixer le bandage (130) au moyeu de roue central (120), **caractérisé en ce que** les boulons (150) sont configurés pour être insérés dans le premier ensemble de trous (126) par un côté intérieur de l'interface étagée orientée vers l'extérieur (124), dans lequel chaque boulon (150) est configuré pour être inséré dans l'une parmi un ensemble de plaques de retenue de boulons (170) avant d'être inséré dans l'un parmi le premier ensemble de trous (126), dans lequel chaque plaque de retenue de boulons (170) inclut au moins deux trous configurés pour recevoir des boulons adjacents (150), et
dans lequel le bandage (130) est configuré pour être retiré et remplacé une fois fixé au moyeu de roue central (120) sans nécessiter le retrait d'aucun des composants fixés directement à l'essieu (110).

2. Ensemble roue de chemin de fer selon la revendication 1, dans lequel l'interface étagée orientée vers l'extérieur (124) du moyeu central (120) s'interface directement avec l'interface étagée orientée vers l'intérieur (134) du bandage (130) sans aucun composant entre l'interface étagée orientée vers l'extérieur (124) et l'interface étagée orientée vers l'intérieur (134).

3. Ensemble roue de chemin de fer selon la revendication 1, dans lequel le bandage (130) comprend un bandage en acier.

4. Ensemble roue de chemin de fer selon la revendication 1, dans lequel les boulons (150) insérés dans le premier ensemble de trous (126) et le second ensemble de trous (136) fixent le bandage (130) au moyeu de roue central (120) en utilisant des écrous de blocage autonomes (160).

5. Ensemble roue de chemin de fer selon la revendication 1, dans lequel chaque plaque de retenue de boulons (170) est configurée pour maintenir au moins deux boulons (150) en position à l'intérieur du premier ensemble de trous (126) et empêcher les boulons de se desserrer pendant le déplacement.

6. Ensemble roue de chemin de fer selon la revendication 1, dans lequel un diamètre interne du bandage (130) est supérieur à une dimension externe d'un palier configuré pour attacher un essieu monté comprenant l'ensemble roue de chemin de fer (100) à un ensemble bogie.

7. Ensemble roue de chemin de fer selon la revendication 1, dans lequel le bandage (130) est configuré pour être retiré de l'ensemble roue de chemin de fer (100) et remplacé sans nécessiter l'utilisation d'une presse.

8. Ensemble roue de chemin de fer selon la revendication 1, dans lequel le véhicule de chemin de fer présente une configuration de palier intérieur, et dans lequel le bandage (130) est configuré pour être retiré de l'ensemble roue de chemin de fer (100) et remplacé sans nécessiter le détachement d'un ensemble bogie du véhicule de chemin de fer ou le détachement d'un essieu monté qui inclut l'ensemble roue de chemin de fer d'un ensemble bogie.

9. Procédé de changement d'un bandage (130) d'un ensemble roue de chemin de fer (100) selon l'une des revendications précédentes fixé à un véhicule de chemin de fer, dans lequel l'ensemble roue de chemin de fer comprend un moyeu de roue central (120) fixé à un essieu (110) du véhicule de chemin de fer et un bandage (130) fixé au véhicule de chemin de fer par l'intermédiaire du moyeu de roue central (120), le procédé comprenant :
le soulèvement d'un véhicule de chemin de fer sur lequel l'ensemble roue de chemin de fer est fixé ;
le déboulonnage du bandage (130) du moyeu de roue central (120) ;
le retrait du bandage (130) du véhicule de chemin de fer sans utiliser de presse et ni ne devoir retirer aucun des composants fixés directement à l'essieu (110) ;
le coulissement d'un nouveau bandage (130) sur l'essieu (110), dans lequel le nouveau bandage (130) est fixé au véhicule de chemin de fer par l'intermédiaire du moyeu de roue central (120) en utilisant des boulons (150) insérés à la fois dans un premier ensemble de trous (126) du moyeu de roue central (120) et un second ensemble de trous (136) du bandage (130) à travers un côté intérieur du moyeu de roue central (120), dans lequel chaque boulon (150) est inséré dans l'une parmi un ensemble de plaques de retenue de boulons (170) avant d'être inséré dans l'un parmi le premier ensemble de trous (126), dans lequel chaque plaque de retenue de boulons (170) inclut au moins deux trous configurés pour recevoir des boulons adjacents (150) ; et
l'abaissement du véhicule de chemin de fer sur la voie.

10. Procédé selon la revendication 9, dans lequel le véhicule de chemin de fer présente une configuration de palier intérieur, et dans lequel le bandage (130) est retiré du véhicule de chemin de fer sans avoir à détacher un ensemble bogie du véhicule de chemin de fer ni ne devoir retirer un essieu monté comprenant l'ensemble roue de chemin de fer (100) d'un ensemble bogie du véhicule de chemin de fer.

11. Procédé selon la revendication 9, dans lequel le véhicule de chemin de fer présente une configuration de palier extérieur, et dans lequel le coulissement du nouveau bandage sur l'essieu (110) comprend le coulissement du nouveau bandage sur un palier utilisé pour fixer un essieu monté comprenant l'ensemble roue de chemin de fer (100) à un ensemble bogie du véhicule de chemin de fer.

12. Procédé selon la revendication 11, dans lequel un diamètre interne du bandage (130) est supérieur à une dimension externe du palier.

13. Procédé selon la revendication 11, le procédé comprenant en outre :
le retrait d'un ensemble bogie du dessous du véhicule de chemin de fer ;
le détachement d'un essieu monté comprenant l'ensemble roue de chemin de fer (100) d'un ensemble bogie du véhicule de chemin de fer ;
le rattachement de l'essieu monté comprenant l'ensemble roue de chemin de fer présentant le nouveau bandage à l'ensemble bogie ; et
la remise en place de l'ensemble bogie sous le véhicule de chemin de fer.

14. Procédé selon la revendication 9, dans lequel le changement du bandage (130) ne nécessite la réévaluation ou le remplacement d'aucun autre composant.
